# EUROPEAN PATENT APPLICATION

(11) **EP 2 169 752 A1**
(43) Date of publication of application: **31.03.2010**
(21) Application number: 08777353.7
(22) Date of filing: 12.06.2008
(51) Int. Cl.: H01M 8/02, H01M 8/10, H01M 8/24

(54) **FUEL CELL**

(30) Priority: 15.06.2007 JP 2007158542
(71) Applicant: Toyota Jidosha Kabushiki Kaisha, Toyota-shi, Aichi 471-8571 (JP)
(72) Inventor: NAGANO, Takuji, Toyota-shi Aichi 471-8571 (JP); NAKAMURA, Norihiko, Toyota-shi Aichi 471-8571 (JP); SATO, Katsumi, Toyota-shi Aichi 471-8571 (JP)
(74) Representative: Kuhnen, Rainer-Andreas
(86) International application number: PCT/JP2008/061172
(87) International publication number: WO 2008/153200

(57) **Abstract**

A fuel cell (100) has a porous body fuel gas passage (24) made of a porous metal (30a) disposed within an anode-side outer frame plate (34), a porous body coolant passage (26) made of a porous metal (30b) within an intermediate outer frame plate (10), and a porous body oxidizer gas passage (22) made of a porous metal (30c) within a cathode-side outer frame plate (32). The porous body fuel gas passage (24) and the porous body coolant passage (26) are separated by a metal film (20), and the porous body oxidizer gas passage (22) and the porous body coolant passage (26) are separated by a metal film (20). The outer sizes of the porous body fuel gas passage (24) and the porous body oxidizer gas passage (22) are smaller than those of the metal films (20).

## Description

### TECHNICAL FIELD

The present invention relates to a fuel cell, and in particular to a fuel cell improvement that enables reductions in the size and weight of the fuel cell, and a lower heat capacity.

### BACKGROUND ART

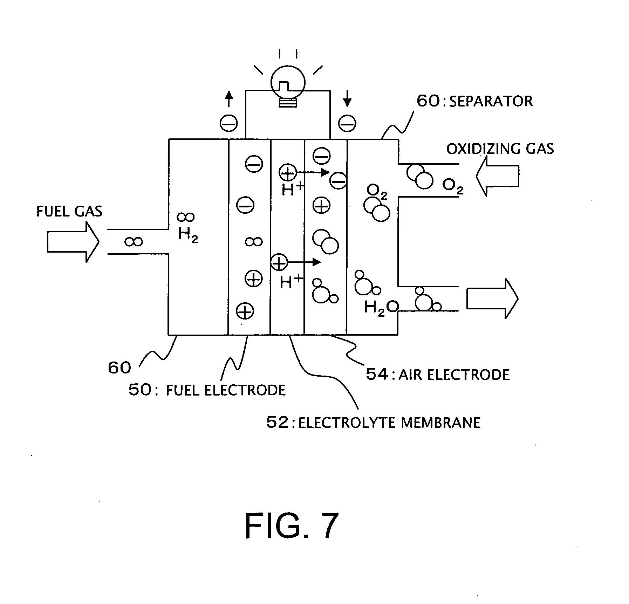

As shown in FIG. 7, in a solid polymer fuel cell, a membrane electrode assembly (MEA) comprising an electrolyte membrane 52 formed from a solid polymer film sandwiched between two electrodes, namely a fuel electrode 50 and an air electrode 54, is itself sandwiched between two separators 60 to generate a cell that functions as the smallest unit, and a plurality of these unit cells are then usually stacked to forma fuel cell stack (FC stack), enabling a high voltage to be obtained.

The mechanism for electric power generation by a solid polymer fuel cell generally involves the supply of a fuel gas such as a hydrogen-containing gas to the fuel electrode (the anode side electrode) 50, and supply of an oxidizing gas such as a gas comprising mainly oxygen (O₂) or air to the air electrode (the cathode side electrode) 54. The hydrogen-containing gas is supplied to the fuel electrode 50 through fuel gas passages, and the action of the electrode catalyst causes the hydrogen to dissociate into electrons and hydrogen ions (H⁺) . The electrons flow through an external circuit from the fuel electrode 50 to the air electrode 54, thereby generating an electrical current. Meanwhile, the hydrogen ions (H⁺) pass through the electrolyte membrane 52 to the air electrode 54, and bond with oxygen and the electrons that have passed through the external circuit, thereby generating reaction water (H₂O). The heat that is generated at the same time as the bonding reaction between hydrogen (H₂), oxygen (O₂) and the electrons is recovered using cooling water. Furthermore, the water generated at the air electrode 54 on the cathode side of the assembly (hereafter referred to as "generated water") is discharged from the cathode side.

Furthermore, in a conventional fuel cell, a single cell and other adjacent cells are partitioned, for example, using separators 60 having a thickness of 100 µm, and this enables the reaction gases to be supplied and diffused individually for each cell, while cooling water is passed through the separators 60 partitioning each of the cells, thereby maintaining the fuel cell at an appropriate temperature and enabling stable electric power generation to be achieved.

For example, Patent Document 1 discloses a fuel cell in which, in order to improve the cooling efficiency, a coolant passage is formed by sandwiching a porous metal material between a pair of plates.
Patent Document 1: JP 2006-286557 A

### DISCLOSURE OF INVENTION

### PROBLEMS TO BE SOLVED BY THE INVENTION

However, as described above, because conventional separators typically have a thickness of approximately 100 µm, the thickness of a fuel cell prepared by stacking a plurality of cells tends to increase. In contrast, in recent years there have been considerable demands for reductions in the size and weight of fuel cells.

### MEANS TO SOLVE THE PROBLEMS

The present invention has been developed in light of the issues described above, and provides a fuel cell that enables reductions in the size and weight of the fuel cell, and a lower heat capacity.

In order to achieve such a fuel cell, the fuel cell of the present invention has the features described below.
(1) A fuel cell comprising a plurality of stacked cells each comprising a membrane electrode assembly having a fuel electrode disposed on one surface of an electrolyte membrane and an air electrode disposed on the other surface, and a pair of metal films that sandwich the membrane electrode assembly therebetween, wherein the fuel cell comprises a porous fuel gas passage comprising a porous metal that is provided between the membrane electrode assembly and one of the metal films and allows passage of a fuel gas, a porous oxidizing gas passage comprising a porous metal that is provided between the membrane electrode assembly and one of the metal films and allows passage of an oxidizing gas, and a porous coolant passage comprising a porous metal that is provided between one cell and another cell, between the metal films, and allows passage of a coolant, and wherein the respective outer dimensions of the porous fuel gas passage and the porous oxidizing gas passage are smaller than the outer dimensions of the metal films.
   Because a thin metal film that is thinner than a typical separator is used to partition the reaction gas passages and the coolant passage, the thickness of the cell itself can be reduced, and the weight of the cell can also be lightened. Accordingly, a fuel cell assembled by stacking a plurality of cells can also be reduced in size and weight. Furthermore, by using a metal film that is thinner than a conventional separator, heat conduction and the heat radiating effect are enhanced, meaning a lower heat capacity can be achieved. Moreover, by making the outer dimensions of the reaction gas passages formed from the porous metals smaller than the outer dimensions of the metal films, an appropriate seal width for ensuring gastight sealing of the reaction gas passages can be provided.
(2) The fuel cell disclosed in (1) above, wherein the porous oxidizing gas passage and the porous coolant passage of one cell, and the porous fuel gas passage of another cell are formed as a single integrated assembly with the metal films disposed therebetween.
   By forming a three-layer integrated assembly in which the porous oxidizing gas passage and the porous coolant passage of one cell, and the porous fuel gas passage of another cell are integrated into a single assembly with the metal films disposed therebetween, a fuel cell can be subsequently assembled with ease by simply sequentially stacking the three-layer integrated assemblies and the membrane electrode assemblies.
(3) The fuel cell disclosed in (1) or (2) above, wherein the membrane electrode assemblyisaseal-integrated type membrane electrode assembly in which a sealing member is molded around the periphery of the membrane electrode assembly as an integral part of the assembly, and the fuel cell is formed by joining the seal-integrated type membrane electrode assembly to an integrated assembly comprising the porous oxidizing gas passage and the porous coolant passage of one cell and the porous fuel gas passage of another cell with the metal films disposed therebetween.
   By employing a seal-integrated type membrane electrode assembly, thermocompression bonding or the like can be used to assemble a fuel cell with ease by sequentially stacking the three-layer integrated assemblies and the membrane electrode assemblies.
(4) The fuel cell disclosed in any one of (1) to (3) above, wherein the spacing between contact points between the porous metal of the porous coolant passage and the metal films is not more than 0.5 mm.
   By employing the above contact point spacing, the shape of the metal films can be maintained, ensuring favorable strength as a separator.
(5) The fuel cell disclosed in any one of (1) to (3) above, wherein the porous metal is a lath cut metal or an expanded metal.
(6) The fuel cell disclosed in any one of (1) to (5) above, wherein the thickness of the metal films is not less than 10 µm and not more than 50 µm.
   Because the thickness of the metal film is one half or less of the thickness of a conventional separator of thickness 100 µm, the thickness of the cell itself can be reduced, and the weight can also be lightened. Accordingly, a fuel cell assembled by stacking a plurality of cells can also be reduced in size and weight.
(7) A fuel cell comprising an anode-side outer frame plate in which is formed a manifold for fluids associated with the fuel cell, a porous fuel gas passage comprising a porous metal that is positioned within the anode-side outer frame plate and allows passage of a fuel gas, an intermediate outer frame plate in which is formed a manifold for fluids associated with the fuel cell, a porous coolant passage comprising a porous metal that is positioned within the intermediate outer frame plate and allows passage of a coolant, a cathode-side outer frame plate in which is formed a manifold for fluids associated with the fuel cell, a porous oxidizing gas passage comprising a porous metal that is positioned within the cathode-side outer frame plate and allows passage of an oxidizing gas, and metal films that partition the porous fuel gas passage from the porous coolant passage and the porous oxidizing gas passage from the porous coolant passage respectively, wherein the respective outer dimensions of the porous fuel gas passage and the porous oxidizing gas passage are smaller than the outer dimensions of the metal films, and the passages and the metal films are formed as a single integrated assembly in a sequence of porous oxidizing gas passage, metal film, porous coolant passage, metal film and porous fuel gas passage, or a sequence of porous fuel gas passage, metal film, porous coolant passage, metal film and porous oxidizing gas passage.
   By positioning the porous coolant passage within the electric power generation region of the intermediate outer frame plate, positioning the porous fuel gas passage and the porous oxidizing gas passage within the electric power generation regions of the anode-side outer frame plate and the cathode-side outer frame plate respectively, and making the outer dimensions of the reaction gas passages comprising porous metal smaller than the outer dimensions of the metal films, thereby ensuring an appropriate seal width for ensuring gastight sealing of the reaction gas passages, a three-layer integrated assembly can be formed that has a manifold, and is composed of the porous oxidizing gas passage, the porous coolant passage and the porous fuel gas passage integrated together with the metal films disposed therebetween. Further, because metal films that are considerably thinner than conventional separators are used to partition the reaction gas passages and the coolant passage, the thickness of the cell itself can be reduced, and the weight can also be lightened. Accordingly, a fuel cell assembled by stacking a plurality of cells can also be reduced in size and weight. Furthermore, by using a metal film that is thinner than a conventional separator, heat conduction and the heat radiating effect are enhanced, meaning a lower heat capacity can be achieved.
(8) The fuel cell disclosed in (7) above, formed as an integrated assembly by stacking either the porous oxidizing gas passage, the metal film, the porous coolant passage, the metal film and the porous fuel gas passage in sequence, or the porous fuel gas passage, the metal film, the porous coolant passage, the metal film and the porous oxidizing gas passage in sequence on a membrane electrode assembly having a fuel electrode disposed on one surface of an electrolyte membrane and an air electrode disposed on the other surface.
   A five-layer integrated assembly can be formed by integrated stacking of an aforementioned three-layer integrated assembly on each surface of the membrane electrode assembly.
(9) The fuel cell disclosed in (7) or (8) above, wherein the spacing between contact points between the porous metal of the porous coolant passage and the metal films is not more than 0.5 mm.
   By employing the above contact point spacing, the shape of the metal films can be maintained, ensuring favorable strength as a separator.
(10) The fuel cell disclosed in any one of (7) to (9) above, wherein the porous metal is a lath cut metal or an expanded metal.
(11) The fuel cell disclosed in any one of (7) to (10) above, wherein the thickness of the metal films is not less than 10 µm and not more than 50 µm.
   Because the thickness of the metal film is one half or less of the thickness of a conventional separator of thickness 100 µm, the thickness of the cell itself can be reduced, and the weight can also be lightened. Accordingly, a fuel cell assembled by stacking a plurality of cells can also be reduced in size and weight.
(12) The fuel cell disclosed in any one of (7) to (11) above, wherein the anode-side outer frame plate, the intermediate outer frame plate and the cathode-side outer frame plate are formed from resin, the membrane electrode assembly is a seal-integrated type membrane electrode assembly in which a sealing member is molded around the periphery of the membrane electrode assembly as an integral part of the assembly, and either pressing or heat pressing of the anode-side outer frame plate, the intermediate outer frame plate, the cathode-side outer frame plate and the seal-integrated type membrane electrode assembly is used to prepare an integrated assembly having either a stacked sequence of porous oxidizing gas passage, metal film, porous coolant passage, metal film, porous fuel gas passage, seal-integrated type membrane electrode assembly, porous oxidizing gas passage, metal film, porous coolant passage, metal film and porous fuel gas passage, or a stacked sequence of porous fuel gas passage, metal film, porous coolant passage, metal film, porous oxidizing gas passage, seal-integrated type membrane electrode assembly, porous fuel gas passage, metal film, porous coolant passage, metal film and porous oxidizing gas passage.
   By employing a seal-integrated type membrane electrode assembly, thermocompression bonding or the like can be used to assemble a fuel cell with ease by sequentially stacking the aforementioned porous oxidizing gas passage, metal film, porous coolant passage, metal film, porous fuel gas passage and membrane electrode assembly.
(13) The fuel cell disclosed in (12) above, wherein a metal foil is disposed between the seal-integrated type membrane electrode assembly and the anode-side outer frame plate, and between the seal-integrated type membrane electrode assembly and the cathode-side outer frame plate.

In those cases where the anode-side outer frame plate, the intermediate outer frame plate and the cathode-side outer frame plate are formed of resin, there is a difference in the linear coefficients of expansion of the resin plates and the metal films, and therefore when the fuel cell heats up during electric power generation, there is a possibility that warping may occur. However, by inserting a metal foil between the resin plates and the seal-integrated type membrane electrode assembly, heat expansion can be alleviated, enabling warping to be better controlled.

### EFFECT OF THE INVENTION

The present invention is able to provide a small and lightweight fuel cell having a low heat capacity.

### BRIEF DESCRIPTION OF THE DRAWINGS

FIG. 1 is a plan view describing one example of the structure of the cathode side in a cell of a fuel cell according to a first embodiment of the present invention.
FIG. 2 is a partial schematic cross-sectional view illustrating one example of the cell structure of a fuel cell according to the first embodiment of the present invention.
FIG. 3 is a partial schematic cross-sectional view illustrating one example of the cell structure of a fuel cell according to a second embodiment of the present invention.
FIG. 4 is a plan view describing one example of the structure of the cathode side in a cell of a fuel cell according to a third embodiment of the present invention.
FIG. 5 is a cross-sectional view along the line B-B shown in FIG. 4.
FIG. 6 is a partial schematic cross-sectional view illustrating one example of the cell structure of a fuel cell of a comparative example.
FIG. 7 is a diagram describing the structure of a unit cell within a fuel cell, and the mechanism during electric power generation.

### DESCRIPTION OF REFERENCE SYMBOLS

10: Intermediate outer frame plate
12a: Oxidizing gas supply manifold
12b: Oxidizing gas discharge manifold
14a: Fuel gas supply manifold
14b: Fuel gas discharge manifold
16a: Coolant supply manifold
16b: Coolant discharge manifold
18: Sealing member
20: Metal film
22: Porous oxidizing gas passage
24: Porous fuel gas passage
26: Porous coolant passage
28: Membrane electrode assembly
30, 30a, 30b, 30c, 40: Porous metal
32: Cathode-side outer frame plate
34: Anode-side outer frame plate
38: Seal-integrated type membrane electrode assembly
39: Gasket
42: Metal foil
100, 110: Fuel cell

### BEST MODE FOR CARRYING OUT THE INVENTION

Embodiments of the present invention are described below with reference to the drawings.

### First Embodiment.

A fuel cell of this embodiment comprises a plurality of stacked cells each comprising a membrane electrode assembly having a fuel electrode disposed on one surface of an electrolyte membrane and an air electrode disposed on the other surface, and a pair of metal films that sandwich the membrane electrode assembly therebetween, wherein the fuel cell comprises a porous fuel gas passage comprising a porous metal that is provided between the membrane electrode assembly and one of the metal films and allows passage of a fuel gas, a porous oxidizing gas passage comprising a porous metal that is provided between the membrane electrode assembly and one of the metal films and allows passage of an oxidizing gas, and a porous coolant passage comprising a porous metal that is provided between one cell and another cell, between the metal films, and allows passage of a coolant, and wherein the respective outer dimensions of the porous fuel gas passage and the porous oxidizing gas passage are smaller than the outer dimensions of the metal films.

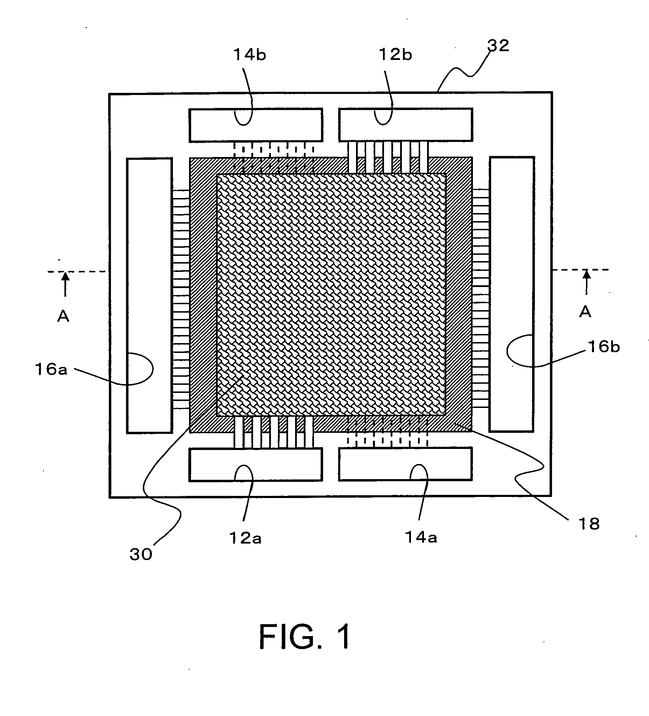

In a more detailed description, as shown in FIG. 1, an oxidizing gas supply manifold 12a, a fuel gas supply manifold 14a, a coolant supply manifold 16a, an oxidizing gas discharge manifold 12b, a fuel gas discharge manifold 14b, and a coolant discharge manifold 16b are formed around the outer periphery (namely, in the non-power generation region) of a cathode-side outer frame plate 32. On the other hand, a porous oxidizing gas passage comprising a porous metal 30 that allows passage of an oxidizing gas is provided within the electric power generation region in the interior of the cathode-side outer frame plate 32, and gas connection passages that connect the porous oxidizing gas passage formed from the porous metal 30 with the oxidizing gas supply manifold 12a and the oxidizing gas discharge manifold 12b are also provided on the cathode-side outer frame plate 32. Furthermore, a sealing member 18 having a predetermined seal width is bonded to the cathode-side outer frame plate 32 around the outer periphery of the porous oxidizing gas passage formed from the porous metal 30.

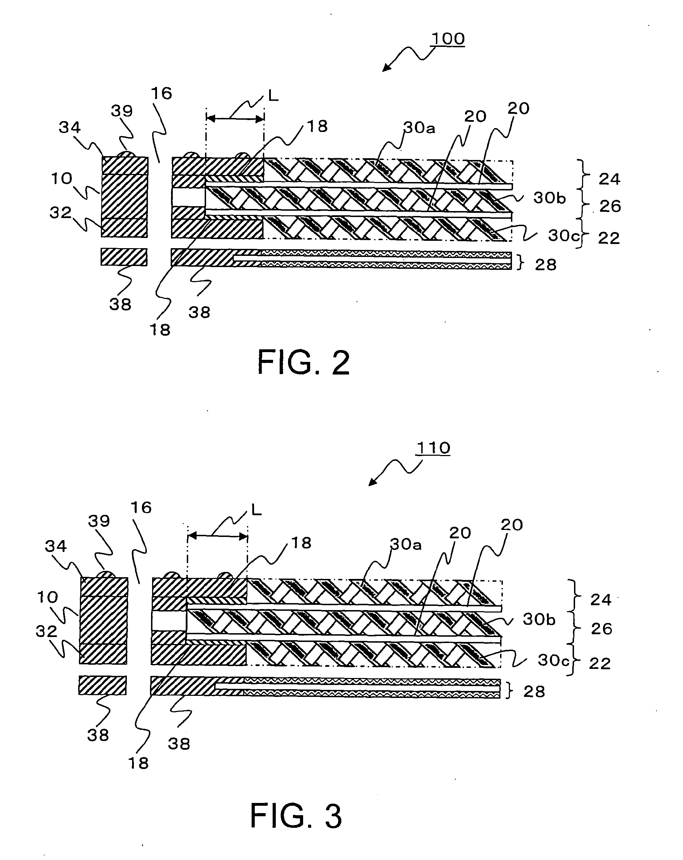

FIG. 2 illustrates a portion of the cross-section along the line A-A shown in FIG. 1, and represents one example of the stacked structure of the membrane electrode assembly, the reaction gas passages and the coolant passage. Amore detailed description is presented below based on FIG. 1 and FIG. 2.

In a fuel cell 100 of this embodiment, in a similar manner to that shown in FIG. 1, an oxidizing gas supply manifold 12a, a fuel gas supply manifold 14a, a coolant supply manifold 16a, an oxidizing gas discharge manifold 12b, a fuel gas discharge manifold 14b, and a coolant discharge manifold 16b are also formed around the outer periphery (namely, in the non-power generation region) of an anode-side outer frame plate 34. On the other hand, a porous fuel gas passage 24 comprising a porous metal 30a that allows passage of a fuel gas is provided within the electric power generation region in the interior of the anode-side outer frame plate 34, and gas connection passages that connect the porous fuel gas passage 24 formed from the porous metal 30a with the fuel gas supply manifold 14a and the fuel gas discharge manifold 14b are also provided on the anode-side outer frame plate 34. Furthermore, a sealing member 18 having a predetermined seal width L is bonded to the anode-side outer frame plate 34 around the outer periphery of the porous fuel gas passage 24 formed from the porous metal 30a.

Furthermore, in a similar manner to that shown in FIG. 1, an oxidizing gas supply manifold 12a, a fuel gas supply manifold 14a, a coolant supply manifold 16a, an oxidizing gas discharge manifold 12b, a fuel gas discharge manifold 14b, and a coolant discharge manifold 16b are also formed around the outer periphery (namely, in the non-power generation region) of an intermediate outer frame plate 10. On the other hand, a porous coolant passage 26 comprising a porous metal 30b that allows passage of a coolant (such as cooling water) is provided within the electric power generation region in the interior of the intermediate outer frame plate 10, and coolant connection passages that connect the porous coolant passage 26 formed from the porous metal 30b with the coolant supply manifold 16a and the coolant discharge manifold 16b are also provided on the intermediate outer frame plate 10. Here, the porous coolant passage 26 formed from the porous metal 30b occupies substantially all of the electric power generation region of the intermediate outer frame plate 10.

Moreover, as shown in FIG. 2, metal films 20 are provided so as to partition the porous fuel gas passage 24 from the porous coolant passage 26, and the porous oxidizing gas passage 22 from the porous coolant passage 26 respectively.

As shown in FIG. 1 and FIG. 2, the outer dimensions of the porous fuel gas passage 24 and the porous oxidizing gas passage 22, namely the outer dimensions of the porous metal 30a and the porous metal 30c, are smaller than the outer dimensions of the metal films 20. Accordingly, a seal width L can be provided that ensures gastight sealing of the reaction gas passages. Moreover, by conducting bonding using the sealing member 18, a three-layer integrated assembly can be formed in which the porous oxidizing gas passage 22, the metal film 20, the porous coolant passage 26, the metal film 20 and the porous fuel gas passage 24 are stacked together in sequence as a single integrated assembly. In FIG. 2, stacking was conducted in the sequence described above, but the present invention is not limited to this configuration, and a stacked sequence of the porous fuel gas passage, metal film, porous coolant passage, metal film and porous oxidizing gas passage may also be integrated into a single assembly.

The seal width L may be selected appropriately in accordance with the size of the cell, and by ensuring a width of approximately 5 mm, the reaction gas passages can be sealed in a gastight manner, and the three-layer integrated assembly described above can be formed.

Moreover, in this embodiment, a seal-integrated type membrane electrode assembly 38 is used in which the sealing member is molded as an integral part of the assembly around the periphery of a membrane electrode assembly 28 having a fuel electrode disposed on one surface of an electrolyte membrane and an air electrode disposed on the other surface. As a result, by applying pressure via a gasket 39, compression bonding can be used to simply and sequentially assemble the three-layer integrated assembly described above and the membrane electrode assembly.

Further, the metal films 20 described above may be formed of titanium, stainless steel or aluminum or the like, and the metal film surface may be coated with a conductive plating if required. Furthermore, if due consideration is given to the shape retention properties required for favorable function as a separator, then the thickness of the metal films 20 is typically not less than 10 µm and not more than 50 µm, and in terms of achieving both favorable strength for the metal films and a reduction in the weight of the fuel cell, a thickness of 25 µm is preferred.

In the fuel cell 100 of the present embodiment, the spacing between the contact points between the porous metal 30b of the porous coolant passage 26 and the metal films 20 is not more than 0.5 mm. This ensures that the shape of the metal films 20 is retained, thereby providing adequate strength for the films to function as separators.

The porous metals 30a, 30b and 30c may use a lath cut metal or an expanded metal.

In the present embodiment, the term "lath cut metal" describes a flat thin metal sheet in which sequential zigzag cuts have been formed in the sheet, and these cuts have then been pushed and bent so as to form a network of narrow diameter through holes in the metal. The term "expanded metal" describes a flat thin metal sheet in which sequential zigzag cuts have been formed in the sheet, these cuts have then been pushed and bent so as to form a network of narrow diameter through holes in the metal, and the metal sheet has then be rolled to form a substantially flat sheet. Because an expanded metal sheet is molded as a substantially flat sheet, additional process steps for removing unnecessary bends or irregularities in the final molded product need not be conducted, meaning the production costs can be reduced. Second Embodiment.

The structure of a fuel cell 110 according to a second embodiment is described below with reference to FIG. 3. Those structural components that are the same as those in the fuel cell 100 of the first embodiment are labeled with the same symbols, and their description is omitted here.

In the first embodiment, the anode-side outer frame plate 34, the intermediate outer frame plate 10 and the cathode-side outer frame plate 32 may be formed of either metal or resin, but in this embodiment, the anode-side outer frame plate 34, the intermediate outer frame plate 10 and the cathode-side outer frame plate 32 shown in FIG. 3 are formed from resin. Accordingly, hot-pressing can be used to conduct thermocompression bonding of these plates, meaning the aforementioned three-layer integrated assembly in which the porous oxidizing gas passage 22, the metal film 20, the porous coolant passage 26, the metal film 20 and the porous fuel gas passage 24 are stacked together in sequence as a single integrated assembly can be formed with comparative ease. Moreover, as described above, a stacked sequence of the porous fuel gas passage, metal film, porous coolant passage, metal film and porous oxidizing gas passage may also be integrated into a single assembly to form a three-layer integrated assembly.

Further, by forming the above plates from resin, the plates can be made smaller and lighter than those cases where the plates are formed from metal members. Furthermore, by forming the manifold portions from resin, that is, by forming the non-power generation regions from resin, the thermal conductivity can be lowered compared to the case of a metal material. As a result, in the electric power generation region, heat radiation can be proactively promoted by the metal films 20, whereas heat radiation can be suppressed in the non-power generation region, which means that, for example, the rate at which the electrode temperature rises upon startup in sub-zero temperatures can be accelerated.

Examples of resins that may be used for forming the anode-side outer frame plate 34, the intermediate outer frame plate 10 and the cathode-side outer frame plate 32 include thermosetting silicon-based resins and thermoplastic resins.

In the second embodiment, a seal-integrated type membrane electrode assembly 38 similar to the first embodiment may be used in which the sealing member is molded as an integral part of the assembly around the periphery of the membrane electrode assembly 28 having a fuel electrode disposed on one surface of the electrolyte membrane and an air electrode disposed on the other surface. As a result, by applying pressure via the gasket 39 or the like, compression bonding can be used to simply and sequentially assemble the three-layer integrated assembly described above and the membrane electrode assembly. Here, as shown in FIG. 3, the integration process is preferably conducted after a metal foil 42 has been positioned between the seal-integrated type membrane electrode assembly 38 and the cathode-side outer frame plate 32. Because there is a difference in the linear coefficients of expansion of the plates formed of resin and the metal films 20, when the fuel cell heats up during electric power generation, there is a possibility that warping may occur, but by inserting the metal foil 42 between the resin plates and the seal-integrated type membrane electrode assembly 38, heat expansion can be alleviated, enabling warping to be suppressed. Similarly, although not shown in the figure, a metal foil 42 is also inserted between the seal-integrated type membrane electrode assembly 38 and the anode-side outer frame plate 34. The metal foil 42 is preferably as thin as possible, and for example, is preferably within a range from approximately 10 µm to 25 µm. Third Embodiment.

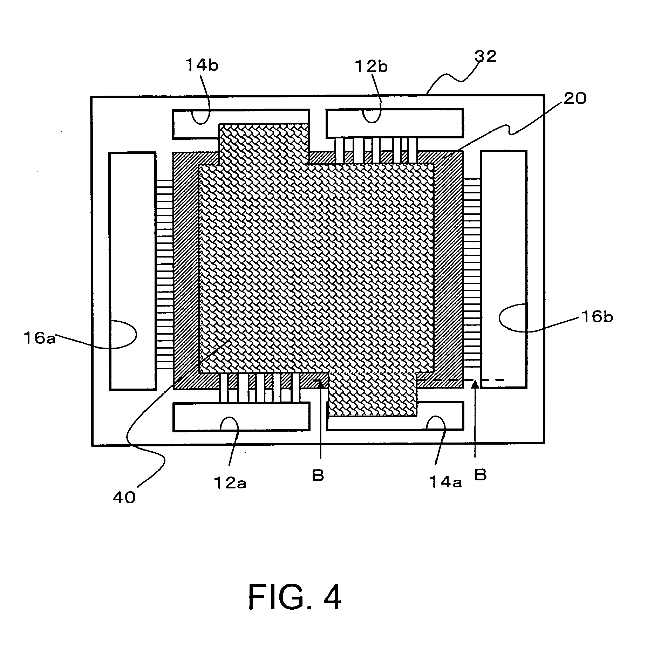

The structure of a fuel cell according to a third embodiment of the present invention is also illustrated in the drawings, and differs from the fuel cell of the first embodiment in that the porous metals that form the porous passages are formed so as to partially extend out to the manifold. In other words, in this embodiment, as shown in FIG. 4, the oxidizing gas supply manifold 12a, the fuel gas supply manifold 14a, the coolant supply manifold 16a, the oxidizing gas discharge manifold 12b, the fuel gas discharge manifold 14b, and the coolant discharge manifold 16b are formed around the outer periphery (namely, in the non-power generation region) of the cathode-side outer frame plate 32. On the other hand, a porous oxidizing gas passage comprising a porous metal 40 that allows passage of the oxidizing gas is provided within the electric power generation region in the interior of the cathode-side outer frame plate 32, and a sealing member 18 having a predetermined seal width is bonded to the cathode-side outer frame plate 32 around the outer periphery of the porous oxidizing gas passage formed from the porous metal 40. In addition, the gas connection passages that connect the porous oxidizing gas passage formed from the porous metal 40 with the oxidizing gas supply manifold 12a and the oxidizing gas discharge manifold 12b are also filled with the porous metal 40.

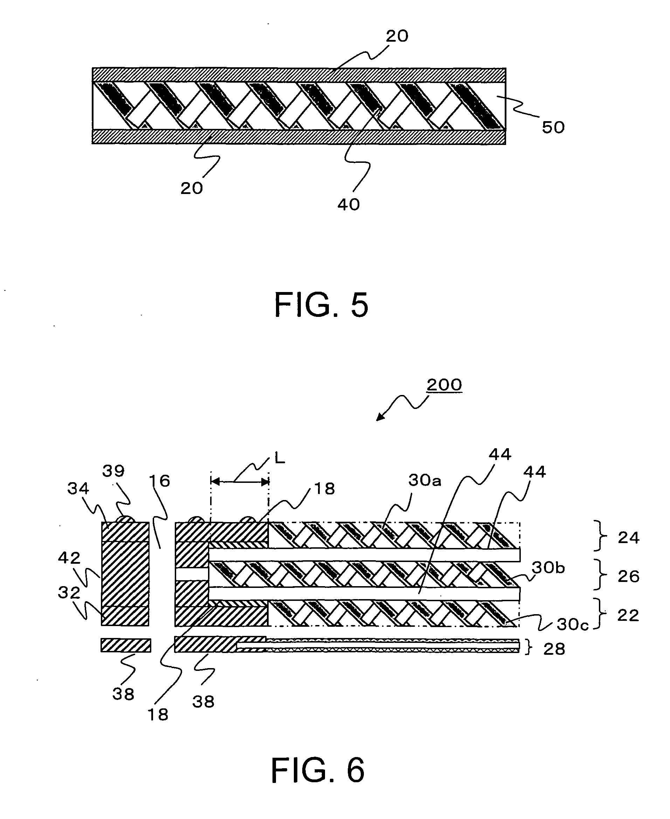

Accordingly, as illustrated in FIG. 5, which represents a cross-sectional view along the ling B-B in FIG. 4, even if the oxidizing gas connection passages weaken slightly as a result of the use of thin metal films 20, because the connection passages are filled with the porous metal 40, the cross-sectional area of the connection passages can be maintained, enabling stable supply of the oxidizing gas and stable discharge of the reaction water. Although not shown in the figures, a porous metal may also be used to fill the connection passages for the cathode-side outer frame plate and the intermediate outer frame plate, in a similar manner to that shown in FIG. 4 and FIG. 5. This enables supply and discharge of the reaction gases and the coolant to be conducted in a stable manner, meaning the electric power generation efficiency of the fuel cell can be maintained in a stable manner.

### EXAMPLES

### Example 1.

Using the structure shown in FIG. 1, wherein the thickness of the metal films 20 formed of titanium was 25 µm, a fuel cell was formed from a single stack of cells (total number of cells: 400, total number of metal films: 800).

### Example 2.

Using the structure shown in FIG. 1, wherein the thickness of the metal films 20 formed of titanium was 10 µm, a fuel cell was formed from a single stack of cells (total number of cells: 400, total number of metal films: 800).

### Example 3.

Using the structure shown in FIG. 1, wherein the thickness of the metal films 20 formed of titanium was 50 µm, a fuel cell was formed from a single stack of cells (total number of cells: 400, total number of metal films: 800).

### Comparative example.

Using the structure shown in FIG. 6, wherein the thickness of metal films 44 formed of titanium was 100 µm, a fuel cell was formed from a single stack of cells (total number of cells: 400, total number of metal films: 800).

The fuel cells of examples 1 to 3 occupied volumes that were smaller than that of the fuel cell of the comparative example by 35%, 25% and 20% respectively. Furthermore, the weight of the fuel cells was also able to be reduced by 40%, 35% and 35% respectively.

Although a detailed description of the present invention is presented above, the scope of the present invention is not limited by the preceding description.

Furthermore, the detailed description, claims, drawings and abstract for an invention disclosed in Japanese Patent Application No. 2007-158542, filed June 15, 2007, are also incorporated in their entirety within the present application.

### INDUSTRIAL APPLICABILITY

The fuel cell of the present invention is effective in any application that requires the use of a fuel cell, and is ideal for vehicle-mounted fuel cell applications.

## Claims

1. A fuel cell comprising a plurality of stacked cells each comprising a membrane electrode assembly having a fuel electrode disposed on one surface of an electrolyte membrane and an air electrode disposed on another surface, and a pair of metal films that sandwich the membrane electrode assembly therebetween, wherein the fuel cell comprises:
a porous fuel gas passage comprising a porous metal that is provided between the membrane electrode assembly and one of the metal films and allows passage of a fuel gas,
a porous oxidizing gas passage comprising a porous metal that is provided between the membrane electrode assembly and one of the metal films and allows passage of an oxidizing gas, and
a porous coolant passage comprising a porous metal that is provided between one cell and another cell, between the metal films, and allows passage of a coolant, and
the respective outer dimensions of the porous fuel gas passage and the porous oxidizing gas passage are smaller than the outer dimensions of the metal films.

2. The fuel cell according to Claim 1, wherein
the porous oxidizing gas passage and the porous coolant passage of one cell, and the porous fuel gas passage of another cell are formed as a single integrated assembly with the metal films disposed therebetween.

3. The fuel cell according to Claim 1, wherein
the membrane electrode assembly is a seal-integrated type membrane electrode assembly in which a sealing member is molded around a periphery of the membrane electrode assembly as an integral part of the assembly, and
the fuel cell is formed by joining the seal-integrated type membrane electrode assembly to an integrated assembly comprising the porous oxidizing gas passage and the porous coolant passage of one cell and the porous fuel gas passage of another cell with the metal films disposed therebetween.

4. The fuel cell according to Claim 2, wherein
the membrane electrode assembly is a seal-integrated type membrane electrode assembly in which a sealing member is molded around a periphery of the membrane electrode assembly as an integral part of the assembly, and
the fuel cell is formed by joining the seal-integrated type membrane electrode assembly to an integrated assembly comprising the porous oxidizing gas passage and the porous coolant passage of one cell and the porous fuel gas passage of another cell with the metal films disposed therebetween.

5. The fuel cell according to Claim 1, wherein
a spacing between contact points between the porous metal of the porous coolant passage and the metal films is not more than 0.5 mm.

6. The fuel cell according to Claim 2, wherein
a spacing between contact points between the porous metal of the porous coolant passage and the metal films is not more than 0.5 mm.

7. The fuel cell according to Claim 1, wherein
the porous metal is a lath cut metal or an expanded metal.

8. The fuel cell according to Claim 1, wherein
a thickness of the metal films is not less than 10 µm and not more than 50 µm.

9. A fuel cell, comprising:
an anode-side outer frame plate in which is formed a manifold for fluids associated with the fuel cell,
a porous fuel gas passage comprising a porous metal that is positioned within the anode-side outer frame plate and allows passage of a fuel gas,
an intermediate outer frame plate in which is formed a manifold for fluids associated with the fuel cell,
a porous coolant passage comprising a porous metal that is positioned within the intermediate outer frame plate and allows passage of a coolant,
a cathode-side outer frame plate in which is formed a manifold for fluids associated with the fuel cell,
a porous oxidizing gas passage comprising a porous metal that is positioned within the cathode-side outer frame plate and allows passage of an oxidizing gas, and
metal films that partition the porous fuel gas passage from the porous coolant passage and the porous oxidizing gas passage from the porous coolant passage respectively, wherein
the respective outer dimensions of the porous fuel gas passage and the porous oxidizing gas passage are smaller than the outer dimensions of the metal films, and
the passages and the metal films are formed as a single integrated assembly in a sequence of porous oxidizing gas passage, metal film, porous coolant passage, metal film and porous fuel gas passage, or a sequence of porous fuel gas passage, metal film, porous coolant passage, metal film and porous oxidizing gas passage.

10. The fuel cell according to Claim 9, wherein
the fuel cell is formed as an integrated assembly by stacking either the porous oxidizing gas passage, the metal film, the porous coolant passage, the metal film and the porous fuel gas passage in sequence, or the porous fuel gas passage, the metal film, the porous coolant passage, the metal film and the porous oxidizing gas passage in sequence on a membrane electrode assembly having a fuel electrode disposed on one surface of an electrolyte membrane and an air electrode disposed on another surface.

11. The fuel cell according to Claim 9, wherein
a spacing between contact points between the porous metal of the porous coolant passage and the metal films is not more than 0.5 mm.

12. The fuel cell according to Claim 10, wherein
a spacing between contact points between the porous metal of the porous coolant passage and the metal films is not more than 0.5 mm.

13. The fuel cell according to Claim 9, wherein
the porous metal is a lath cut metal or an expanded metal.

14. The fuel cell according to Claim 9, wherein
a thickness of the metal films is not less than 10 µm and not more than 50 µm.

15. The fuel cell according to Claim 9, wherein
the anode-side outer frame plate, the intermediate outer frame plate and the cathode-side outer frame plate are formed from resin,
the membrane electrode assembly is a seal-integrated type membrane electrode assembly in which a sealing member is molded around a periphery of the membrane electrode assembly as an integral part of the assembly, and
either pressing or heat pressing of the anode-side outer frame plate, the intermediate outer frame plate, the cathode-side outer frame plate and the seal-integrated type membrane electrode assembly is used to prepare an integrated assembly having either a stacked sequence of porous oxidizing gas passage, metal film, porous coolant passage, metal film, porous fuel gas passage, seal-integrated type membrane electrode assembly, porous oxidizing gas passage, metal film, porous coolant passage, metal film and porous fuel gas passage, or a stacked sequence of porous fuel gas passage, metal film, porous coolant passage, metal film, porous oxidizing gas passage, seal-integrated type membrane electrode assembly, porous fuel gas passage, metal film, porous coolant passage, metal film and porous oxidizing gas passage.

16. The fuel cell according to Claim 10, wherein
the anode-side outer frame plate, the intermediate outer frame plate and the cathode-side outer frame plate are formed from resin,
the membrane electrode assembly is a seal-integrated type membrane electrode assembly in which a sealing member is molded around a periphery of the membrane electrode assembly as an integral part of the assembly, and
either pressing or heat pressing of the anode-side outer frame plate, the intermediate outer frame plate, the cathode-side outer frame plate and the seal-integrated type membrane electrode assembly is used to prepare an integrated assembly having either a stacked sequence of porous oxidizing gas passage, metal film, porous coolant passage, metal film, porous fuel gas passage, seal-integrated type membrane electrode assembly, porous oxidizing gas passage, metal film, porous coolant passage, metal film and porous fuel gas passage, or a stacked sequence of porous fuel gas passage, metal film, porous coolant passage, metal film, porous oxidizing gas passage, seal-integrated type membrane electrode assembly, porous fuel gas passage, metal film, porous coolant passage, metal film and porous oxidizing gas passage.

17. The fuel cell according to Claim 15, wherein
a metal foil is disposed between the seal-integrated type membrane electrode assembly and the anode-side outer frame plate, and between the seal-integrated type membrane electrode assembly and the cathode-side outer frame plate.

18. The fuel cell according to Claim 16, wherein
a metal foil is disposed between the seal-integrated type membrane electrode assembly and the anode-side outer frame plate, and between the seal-integrated type membrane electrode assembly and the cathode-side outer frame plate.
